# EUROPEAN PATENT APPLICATION

(11) **EP 1 746 535 A1**
(43) Date of publication of application: **24.01.2007**
(21) Application number: 06015134.7
(22) Date of filing: 20.07.2006
(51) Int. Cl.: G06Q 30/00, G06F 21/00

(54) **Secure transaction string**

(30) Priority: 20.07.2005 US 595612 P
(71) Applicant: Kanngard, Lars Olof, Dar Al Buteen II PO Box 29522 Deira Dubai (AE); Arnesson, Bengt, Taij Palace PO Box 29522 Deira Dubai (AE)
(72) Inventor: Kanngard, Lars Olof, Dar Al Buteen II PO Box 29522 Deira Dubai (AE); Arnesson, Bengt, Taij Palace PO Box 29522 Deira Dubai (AE)
(74) Representative: Targett, Kenneth Stanley

(57) **Abstract**

A system and method creates and/or handles a secure transaction string. In a preferred embodiment, a device (202) receives entry of a card's information and user input for a transaction. The transaction information is preferably divided into a plurality of blocks (206) which are separately encrypted using different encryption keys for each. Entities along the transaction chain are preferably equipped to decrypt only those blocks with information which they need in order to participate in the transaction, so that sensitive information not needed by an entity is not stored at that entity in an unencrypted format.

## Description

### BACKGROUND AND SUMMARY OF THE INVENTION

The present application relates to electronic transactions, and more particularly to a system and method for creating and conducting secure transactions.

The present application relates to transaction security, and more particular to a system and method for creating transactions in such manner that part of the data is only visible and accessible for specific and authorized users / systems, whereby any other system can store data (the transaction) without any future security problem or being able to use transaction data for a purpose it was not meant to be used for.

Today technology is bringing about major changes in the ways transactions are conducted and number of transactions escalates each day. E-commerce, which stands for electronic commerce, reflects the shift from doing things via paper, documents, coins and bank notes toward doing things by electronic means, using computers or any other device and communicating data over any type of network, i.e. cable networks, fiber, radio, digital or any other type of networks, herein referred to as Network /s.

The shift was meant to be a paperless environment, but the shift from traditional ways to the e-commerce and the eSociety is more the way on how we conduct, confirm and settle a decided action, which as well, at least still, do include that what we did also will end up in a paper format. So we should not just limit the scope of what is described herein to Data, handled in a type of device, computer, terminal, key-pad, mobile phone, normal landline phones, pda's, atm terminals or pos terminals, herein referred to as Computer /s and Device /s or referred to as electronic transaction, the transaction can be viewed or carried on or in any other type of media as well.

Business transactions, financial transaction or any other type of transaction such as stored value transaction require transmission and likely storage of information across networks and various computers and terminal systems, such as servers and or clients or other devices in a network. However, the information being transmitted is often sensitive, and can include transaction numbers, account information, card information, card numbers and personal data such as identity data or biometrical data, pin-numbers that must be protected, but not necessary stated as sensitive data.

Security is therefore a major factor, which today is neglected or nearly impossible to supervise in advancement of networked computer / devices or any other networks essential within the modern eSociety. Security is normally implemented within a device, how data is being stored or implemented between to communicating devices, on how to protect the data, when those devices exchange data and documents, files etc. can be protected by password and encrypted, whereby a password (encryption key) would result in access to a document, content or data in such file or document.

There are many types of computer transactions made within the eSociety by consumers and businesses alike. For example, If a consumer today wants to use a credit card, debit card, stored value card, or any other type of card, some basic requirements generally must be fulfilled. For example, the user (card holder) must sign a sales slip or a print out from a POS terminal and the signature need to match the signature on the card, or the user must be able to verify his or her presence by using the personal pin or access code, and he or she will need to find a merchant or retailer who has a machine or terminal which can read the card. Typically, such equipment is called POS (Point of Sales) terminal. If the consumer wants to withdraw money, he or she will need to find an ATM terminal (Automatic Taller Machine), herein referred to as device or terminal.

The data the user will enter or given by the card or media to the devise (for example, card / user number, pin code, account information, transaction-specific information such as currencies and/or amounts or) in using these terminals will generally be communicated to a number of different systems, raising the possibility that their data will end up in wrong hands. This makes people uncomfortable with using various card solutions in general.

Doing business or buying things via the Internet, or using the mobile phone or a hand held PDA, is sometimes considered a 'risky' thing to do, as demonstrated by common stories of hijacked websites and stolen credit card numbers or when criminals has stolen the hard-drive (mass storage device) from call centers, processing centers or any other involved in the value chain.

The cost of having a terminal, such as a POS terminal, ATM terminal, or cashier system, which has the ability to read and communicate card data and other data that the consumer or holder of the card enters, or transferred to a device from the card, is significantly costly. The cost and risks associated with computer transactions inhibits development of and creates bottle-necks within the growing eSociety.

Another inhibiting aspect to the slow paradigm towards an eSociety is the lack of being able to make micro transactions, which is related the security problem. The way such a transaction is handled in old fashion financial systems which still, even modern ones, are based on a transaction flow in a value chain which was good when it was created, but is currently a poor part of an eSociety where stored values of time, money and other values like carbon values will be the future way of clearing and settling a transaction which needs to happen at the spot and instantly, without any delay at all.

### Examples of Current Market Methods

Up to now, plastic credit cards, and other types of cards, have generally only had a magnetic strip applied at the back. This magnetic strip holds normally only the number of the card, and nothing else, though it is not necessarily limited to only the card number. Improvements on such cards includes the placement of a microchip thereon, also called a smart chip, to hold extra information or even to process information or carry software programs, to add features.

One of the functions is storage of a user's pin code (usually in an encrypted format) or/and biometric information, such as finger-print, such that when the card is inserted into a card-reading device or passed via a reader using radio frequency identification (RFID), the smart chip itself can perform functions such as verification of the user, on the spot or keep track on loyalty points, values or keep the balance of a on the card stored micro-wallet.

If a card is used at an ATM terminal that is not capable of reading the card's smart chip, the terminal reads the magnetic strip (or mag strip) and sends any necessary data there from, along with the user's pin code (as entered by the user) to a clearing center. The clearing center typically contacts the card's issuer, such as via a network connection. The card issuer may also be the issuing bank. The card issuer verifies that the pin code is correct, and replies to queries made, such as by providing whether requested funds are available, or any other type of request made in order to conduct the transaction or service.

A similar process occurs if the card holder uses the card at a POS terminal. For example, some cashier machines have keypads where users can enter their pin codes. Other point of sale terminals also have such keypads, or other types of user verification means (such as biometrics, for example).

If the same consumer uses the card via a mobile phone or via the Internet, the user will not be able to use a pin code because of lack of a means to enter and transmit it. Hence, in such transactions, the card itself is not viewed as being present. This often puts such a transaction into the category of an Internet Purchase, where special rules and fees may apply to both the user and/or the merchant.

Other types of terminals have also come to the market, such as game consoles, TV and movie boxes, which in some cases are interactive via Internet or other types of uplinks. Some of these new devices may or may not be capable of reading magnetic strips.

Information on a card can also be communicated to a card reader by RFID, where a small imbedded chip can reflect or transmit data from its carrier (in this example a card).

Hence, there is a problem in the current state of the art, in that there is no secure solution for how a cardholder verifies that they are in fact the cardholder in transactions where there is no terminal present.

Internet transactions are often conducted without such verification. For example, making a purchase at a website requires the user to enter his or her card number, but does not require verification through entry of the user's pin number.

The data (also called a record) is communicated to a web server and from there passes a number of different processing systems and possible services. The typical user does not know how or where their credit card number (and other sensitive information) may be stored in this process. The industry has rules, such as that you are not allowed to store the card number and in some cases it is masked, some part of the number is only visible, or some part is represented by just **** (stars). However, these rules are not foolproof and are seldom fully respected, resulting in fraudulent acts or a card holder's information falling into the wrong hands.

There has also become a standard, implemented by VISA to use what the industry calls 3-D Secure™ which is a complex way to verify a consumer via the Internet. In this process, the user sends necessary data over 7 different layers of communications and a number of systems will be able to store information about the user, including the card details, even if rules within the industry do not allow that card details are being stored.

Conducting business via Internet is one dimension of the problem. Buying things in a retail shop or at any other location is another dimension of the same problem.

The nature of the latter has its roots in the fact that any type of POS terminal is a costly device. The normal lower price range is above US $150.00 and the more advanced once POS terminals cost above $300.00 dollar.

These devices need communication capability, normally a fixed telephone land line, from which the POS terminal dials up a modem pool which in turn is connected to a bank or a network provider which in its turn communicates with a clearing-hub and can settle a transaction.

There are also available GSM built POS hand-devices, but such devices are still complex and very costly. There are also hand-held solutions for communicating between the terminal and a local/regional wireless local area network (LAN), which 'hub' thereafter communicates into a corporate network and maybe using ADSL or ISDN connections in to a transaction center who thereafter processes the transaction in the described hierarchy.

There is also another type of card-reader available on the market, hereinafter referred to as a key pad, which is a small terminal used to, in some cases, insert a card or just calculating a verification code or give an access code. Today these key pads are used as a verification device, which after having entering a pin code plus a code from, for example, an Internet bank application will generate a code, which in combination with entered data will verify the transaction itself by creating different type of checksums, widely used in the industry today.

These types of terminals is available in various different embodiments, but is herein referred to generally as key pads. Such key pads are typically capable of running software, communicating across networks, etc.

What has been described so far is mainly a reflection of how things work around us in a modem society on the movements towards an eSociety. However, in developing countries where POS terminals and ATMs are difficult to find or the society structure is in such stage that consumers do not have a card solution at their disposal, both purchases or cash withdrawals may be impossible or difficult to implement.

Still we can see an increasing development of different type of card concepts, outside 'normal' channels like VISA and Master Card, where as an example exchange houses issues a card to the guest-worker in a country and a supplement card to the spouse at home, for them to remit funds (sending money home), which is a way to minimize the administration around such transactions.

Some countries are also starting to issue so called National ID cards. Such ID card will be enabled with, in some cases, a smart-chip and possible functions to handle stored value concepts, either stored value of money or government substitutes, health or medical values or stored value of time.

The problem is that with existing technical solutions like traditional POS terminals and ATM machines, few can use these new card concept solutions. This will keep the majority of consumer outside the ability of safeguard their funds and make secure transactions in an easy way.

### Secure Transaction String

The present innovations include a system and/or method for creating secure transactions.

In one example embodiment, a verified user enters transaction related data into a terminal device.

The transaction data can include data read from a card's magnetic strip, data read from the memory ship or processor ship on the card or data entered manually by the user, or other data. The data is divided into blocks, and the plurality of blocks is preferably separately encrypted using different encryption keys. In preferred embodiments, the blocks include parts of the data that are useful or needed by a particular entity involved in the transaction value-chain. For example, if one entity to the transaction needs some but not all of the transaction data, then the data that the one entity needs is encrypted in a first block. The entity is preferably capable of decrypting only the block that includes the data which that entity needs for purposes of the transaction and for them.

By separately encrypting different parts of the transaction data, any entities involved in handling the data and which may need access to some of that data, can decrypt only that data which they need, and to which they are authorized. This has the advantage, among other things, of limiting the exposure of a user's sensitive data or the transaction details in general. The large advantage is, that the created Secure Transaction String can be communicated by any means, visible as printed, written, send by a simple SMS, MMS or via Internet or send between computer networks and can be stored any where, but without proper authority and holder of proper encryptions key's non of the embedded information and transaction data is possible to view.

For example, an entity, part of the transaction value-chain, (entity A) that only needs access to the data in block one (i) will preferably not be able to decrypt block two (ii).

Hence, the entity A only has got the encryption key for block one (i).

Other details and examples of the present innovations are discussed below.

The disclosed innovations, in various embodiments, provide one or more of at least the following advantages:
- a cardholder's pin code is not exposed to unauthorized parties;
- no data is transmitted in an unsecured way and no systems in the communication chain or value-chain can use the cardholder's data, except for those authorized to access it;
- different entities in the transaction chain can access only those parts of the transaction that they need;
- prevents card numbers from being stolen;
- protect nature of the transaction;
- the secure transaction is created with the cardholder present;
- personal data is protected from its source to the party that will process that data;
- card numbers not scattered across various computer systems--only fully authorized systems can access or use the information;
- no more threats of exposing cardholder information when a website is hacked, because the cardholder's information is stored in encrypted format;
- secure transaction string (STS) is created on the spot, and no sensitive information is transmitted in an unencrypted format.

### BRIEF DESCRIPTION OF THE DRAWINGS

The disclosed inventions will be described with reference to the accompanying drawings, which show important sample embodiments of the invention and which are incorporated in the specification hereof by reference, wherein:
**FIG. 1A-1C** show a conceptual chart implementing an embodiment of the present innovations.
**FIG. 2** shows a diagram of the principal structure of a secure transaction string, consistent with an embodiment of the present innovations.
**FIG. 3** shows a flowchart for implementing a process consistent with an embodiment of the present innovations.
**FIG. 4** shows a flowchart for implementing a process consistent with an embodiment of the present innovations.
**FIG. 5** shows a flowchart for implementing a process consistent with an embodiment of the present innovations.

### DETAILED DESCRIPTION OF THE PREFERRED EMBODIMENTS

The numerous innovative teachings of the present application will be described with particular reference to the presently preferred embodiment (by way of example, and not of limitation).

The present innovations, in a preferred embodiment, contribute with a revolutionary solution for how to protect transaction at all levels, from the moment a card holder initiates a transaction all the way to the issuer. These innovations enable introduction of new type of terminals and/or software to conduct 100% secure transactions as well as it make it possible to boost the micro payment, micro charges transactions within the esociety.

The present innovations make it possible to not only verify a user at the spot and encrypt a transaction; they also make it possible for any one who has the proper terminal, incorporating the present innovations, to become a 'live' ATM withdrawal point (Cash-Point).

The present innovations enable anyone to become a new type of merchant (eMerchants) retailer who can clear and settle a transaction by using as an example just a normal mobile phone and an SMS or GPRS message or MMS message.

In one example embodiment, the present innovations have several parts, including, but not limited to: a method of creating a secure transaction string (STS); software configured to collect the transaction data or record and compile and encrypt the record and present an STS record; a card or media reader (such as a key pad) configured with the software; and the format of the STS itself.

The present innovations are based on a method to produce and process a complete secure transaction string, built on/made up from all needed elements (records) of information to be included in a transaction, for example, to verify, settle, store, clear, or process a purchase transaction. In a preferred embodiment, the different elements are brought together in blocks (preferably a plurality of blocks) where each block thereafter is separately encrypted at its source, preferably at the physical location when the card holder is present, and only transmitted in a secure encrypted format thereafter. In preferred embodiments, the issuer (or others who need access in order to process a transaction) is the only one who can decrypt the information (record) or part of the STS Record or being received and processed by the Software. ("Secure encrypted format" shall be understood as, that the factual data, needed for a transaction, which is divided in 2, 3 or more blocks, where each block first is, if needed compressed and thereafter encrypted individually and thereafter compiled/formatted into one secure transaction string.)

From the moment that a card holder uses a card and enters a his pin code, and the STS Record is created and communicated to a server such as the GMN (Global Merchant Network) ViA NET Server (or any server as part of the present innovations), to the moment that the transaction arrives to the issuers systems, no protected information is even visible and cannot be decrypted without having access to the proper encryption key, for example (in preferred embodiments, a 480 bits encryption key is used).

### 4-Dimensional Secure by the ViA STS ― Secure Transaction String

The present innovations, in an example embodiment, are built on a 4 dimensional security level; firstly the card is used with an identified and verified user; secondly the transaction record is sent or received in multi encrypted blocks; thirdly it is implemented at supporting servers involved in the transaction-chain, and fourthly only the issuer can decrypt part of the STS Record. In some embodiments, the issuer or the media holder is the only party who can decrypt the block which holds the final part of the card-number or identifier or other protected information.

One aspect of the present innovations is that the STS Record is created at the spot and thereafter communicated; compare with other systems wherein a card number and in some cases even the pin code are communicated and stored in an unknown number of systems, servers and databases in the chain of systems involved in handling a transaction.

The present innovations include, in a preferred embodiment, collection of data encrypted in several individual blocks, where each block is encrypted by a unique encryption key and where each part of the final 'string' only can be decrypted by an authorized recipient.

The present innovations protect transactions and give the consumer (card holder) or the user full protection for privacy.

The STS method (as an example of the present innovations) is also suitable to pass information such as a biometric-readings, e.g., fingerprints or retinal scans, which the user may not want to be stored or verified any where else than at the issuer of the card.

The Secure Transaction String can be, for example, created by a merchant or retailer or by the consumer (card holder) at a website or any other point of sale (POS). It can then be passed to a clearing center, where it may be partly decrypted, processed and forwarded to the issuers systems where it finally will be decrypted and processed or be sent from an issuer back to the terminal (key pad) or the software which will process or create a STS Record.

### Example Embodiment

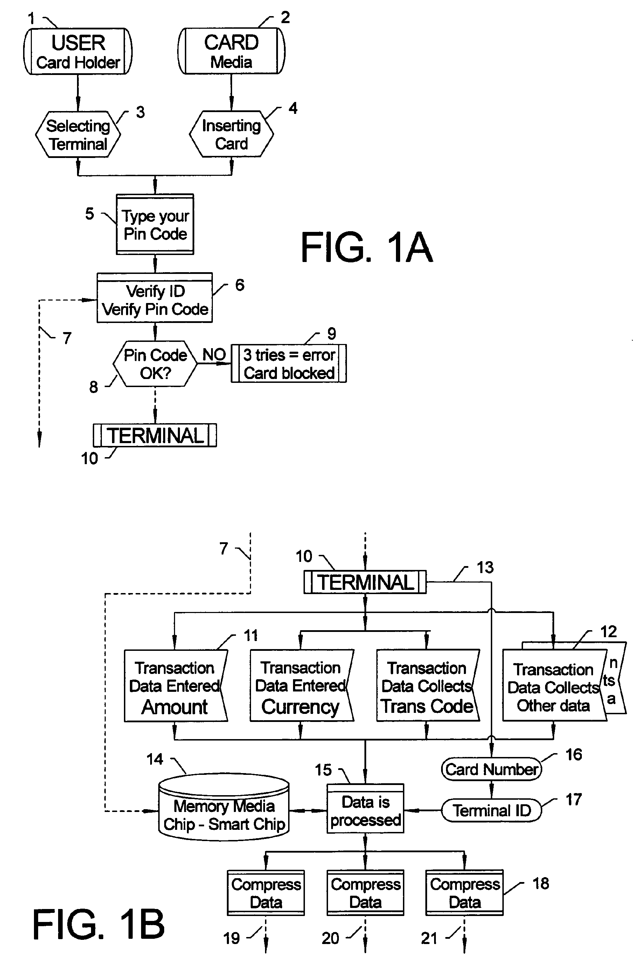

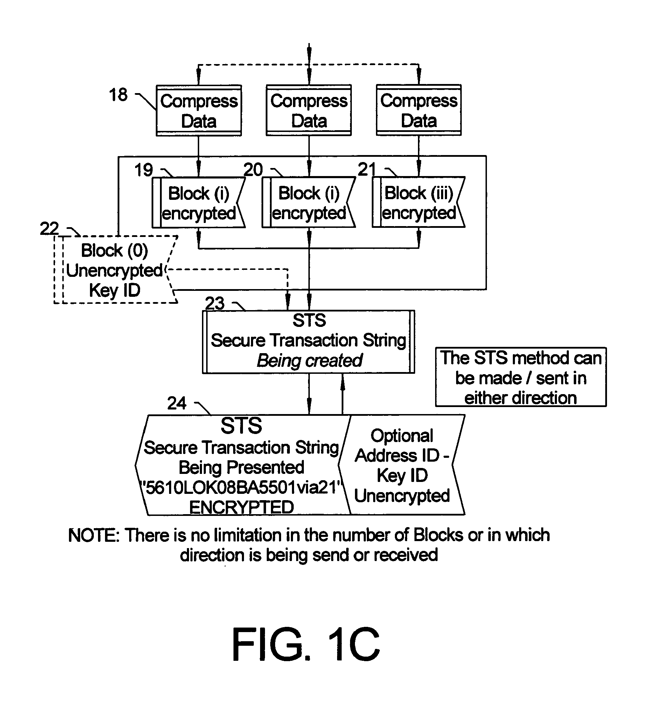

The following example depicts a process, and several elements, consistent with a preferred embodiment of the present innovations. In this illustrative embodiment, shown in **Figures 1A-1C,** a card holder (1) has a card (2) with embedded micro-chip. The user selects a proper terminal (3) and insert the card to the card reader (4) and enters a pin code (5) or uses biometric data (for example) to verify that he or she is the right user of the card/media. The terminal, via its standard software (6) reads the stored data on the micro-chip (14) and verifies (7) that proper code has been used.

In this example, if the user of the card has made three attempts and neither of these attempts is correct (9) the card will be blocked and needs to be returned to its issuer, if the issuer has made such rules embedded to the micro-chip.

If the verification process (8) is successful, the terminal is now ready (10) for further instructions and the user can select the function they want to process. In this example we will conduct a purchase, whereas the user will enter (11) the amount, displayed with a currency symbol and or select a proper currency and can enter a transaction type code, or depending on application enter other data (12) ― entered/collected data.

Terminal ID (16) and card/media number (17) are provided to the process from the terminal (13). The STS Software processes (15) the data and in this example where, three blocks will be used (not limited to 3, can be 2 or 4 or more blocks), each created block will first be compressed (18) separately and passed to the encryption module, where each block is preferably encrypted with separate encryptions keys (19, 20 and 21).

If needed, there is an Address ID or a Key ID (22) added within the STS Record as an unencrypted address header, to identify a specific key or address.

Thereafter the blocks, block (i), block (ii) and block (iii), are combined (23) into one, to form the so called STS Record, which is thereafter presented in a Secure Transaction String. In this example, it is displayed as a 20 characters alphanumeric string (24), the length will vary depending on application.

The transaction, in this standard form, but not limited to, will include three [3] secure blocks and if needed one unencrypted address block. The first block (i) include Terminal ID, Key ID. The second block (ii) include the Key ID, Amount, Transaction Code, Issuer Identifier (up to 6 first digits in a card number) and the third block (iii) include Key ID and the protected part of the card number and other protected data such as biometric data, combined referred to as the STS Record.

In preferred embodiments: each block is collected in numeric or alphanumeric values; all blocks 1 to 3 are compressed individually; all blocks are individually encrypted with separate Key's; and they are then combined to form a STS record.

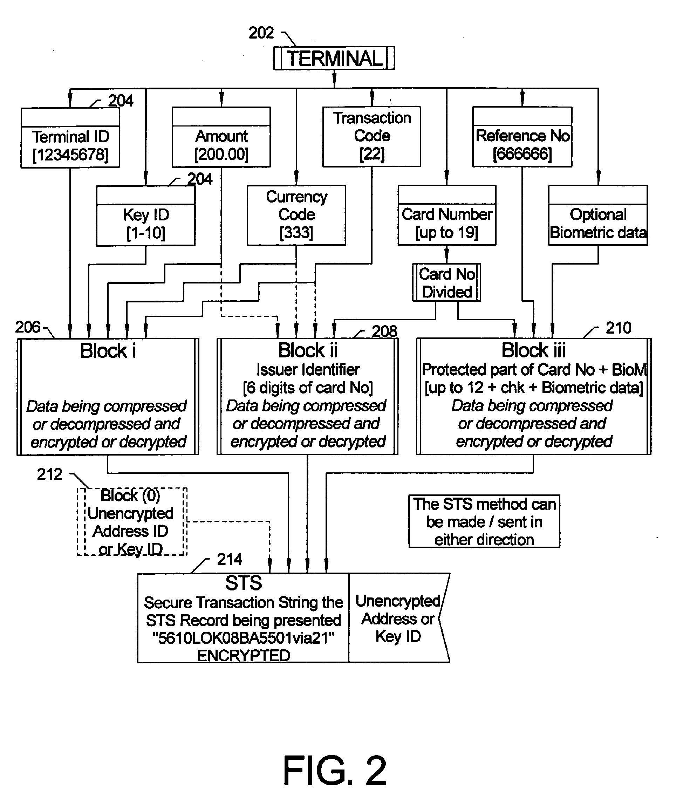

**Figure 2** shows a more detailed view of how the terminal (in some embodiments) assembles the transaction data into blocks, to finally form an STS record.

In this example, terminal **202** is a station capable of receiving input from a user, which preferably includes software running thereon to implement aspects of the present innovations. For example, the terminal collects various transaction data **204** including the terminal ID, amount of the transaction, etc. This data is part of the transaction data. Various entities along the transaction chain may require access to one or more parts of this data, but may not require access to all parts of this data.

In this example, several parts of the transaction data are combined into block i **206;** other parts are combined into block ii **208;** and other parts are combined into block iii **210.** It is noted that any number of blocks could thus be created. Further, any given piece of data may be included in only one block, or it may be included in multiple blocks. Some data may likewise be divided so as to be included in two or more blocks, which would require decoding of all constituent blocks in order to recover the data.

Once the data has been divided into blocks, each block is preferably separately encrypted using a different encryption key. The encrypted blocks are preferably combined to form a single string, the STS **214** which may also include, if needed one unencrypted block to identify an address or key.

### Communicating the STS Record

The complete STS Record can thereafter be communicated, sent to the nearest GMN Hub (Global Merchant Network) ViA NET, either via a simple SMS, MMS or GPRS message, via the Internet, via a normal telephone call or any other type of media or being read as a sequence of numbers and letters or sent by any other available means of media or sent directly to a STS Client, device empowered by the STS software solution.

When the GMN, ViA NET system/server receives the STS Record or any other system empowered with the STS Software, it will preferably first de-compress the record, and then take the first block (i) decrypt the data, process the data and verify the identity of the sender, and match this with other available information. After such verification is made, the GMN, ViA NET system will preferably select proper decryption key or make a proper key and decrypt the first block (i), decrypt bloc (i) and use the data in bloc (i) to verifying where to send the STS Record and send it to a Processing Center, as an example, where the second block (ii) would be decrypted with proper key and after identifying the issuer (the Issuer Identifier is embedded) process needed data, update needed records, statistics, and histogram and send the STS Record to the proper Issuer who would be able to decrypt bloc (iii) and process the final part, check the user data, check available balances one example and return back proper information in the same manner and structure.

If the Issuer has enrolled to the GMN, ViA NET concept and has installed on their side the software to decrypt the STS Record, the record will be passed over to the issuer, in full encrypted mode. If the Issuer selects a standard industry protocol GMN, ViA NET will via a secure link pass the transaction in such format the Issuer has selected and decided.

In this example, the third block (iii) can only be decrypted by the Issuer; non of block (iii) data is stored unencrypted within GMN, ViA NET.

### Verification of sender

If as one example the 'sender' has used a mobile phone, GMN , ViA NET can verify the telephone itself at several levels, both via the phone number itself and by industry standards such as IMSI and ENEI, IMEI or the GMN, ViA NET can identify the sender by the Key and Address ID if used.

If the consumer (card holder) has used a website, the consumer would have filled in, selected what they like to purchase and would thereafter arrive to what is known as the check-out point.

Normally, the consumer will here enter her credit card or stored value card details as well as entering the secure code visible on the back on each card.

In preferred embodiment of the present innovations, however, when the consumer has a key pad the consumer will insert the card into the device, or as described as a card reader, the consumer will enter reference number to the website (Website ID) which is can be the same as a Merchant ID. The consumer will enter the amount and then his or her pin code or biometric data.

The key pad/terminal or software will then process the data and present a numeric string in the display ― the Secure Transaction String, in this case 8 to 64 digits long sequence of number or combination of alphanumeric values. The length of a STS Record can vary depending on the application or consist of several STS Record.

The consumer will enter this 'string' (STS Record) in the proper field at the website. The provider of the Web site will send the transaction to the GMN, ViA NET hub or server empowered with the STS Software authorized to handle transactions and receive back a verification code. By using either a card reader connected to a computer device, Lap-Top, handheld or desk-top computer in combination with STS software or using a card reader combined in a small hand-device, the card holder insert their card, enter the pin code to verify that they are the right holder, enter amount and type of transaction, the device/software will build a transaction-string, encrypt the data in three layers and present a numeric secure transaction string, after that the data is encrypted the data will be compressed to a single alphanumeric string. In this case approximately 20 characters, but can for other applications either be less or more and also depending on the terminal in use, consist of either just a bitmap or a string with other characters or numbers.

In the standard format, 20 to 64 numeric characters, is being used to present the STS Record, though other formats can be used. This secure transaction string can thereafter be communicated to the clearing and settlement center/hub, by any type of communication, just by a simple SMS or GPRS via a mobile phone or mobile device or be typed in on a normal telephone by DTMF signals or any other means of communication even spoken in and being recognized and translated in to the number string or being entered as a Secure Transaction String on any web based service, with or without the use of HTTPS.

When the STS (Secure Transaction String) arrives to the clearing hub, the clearing hub (GMN, ViA NET) will preferably identify from where the transactions comes, by knowing, for example, that a device being used has a user with a specific mobile phone number. The hub then will preferably collect the IMEI data from the GSM, ViA NET operator. The clearing hub will preferably then decompress the STS, read and select the right key to be used to decrypt the first layer (the first part of the string), select proper Card Issuer (preferably by only using the first 6 digits of a card number), then process the request to the Card Issuer. The Card Issuer will then preferably decrypt the last part of the STS and validate the transaction. The Card Issuer will then send back a verification code or other relevant data and information and as well pass data if the transaction in question has been accepted or rejected. Depending on how the Card Issuer is connected to the Clearing Hub, the STS can either be sent to the Card Issuer fully encrypted, or, for example, it can use the security level the Card Issuer has selected and exchange needed information.

**Table 1:**

| Standard Secure Transaction String Structure | | | Record length |
|---|---|---|---|
| Terminal ID | A | | 8 |
| Key ID | A | | 1 |
| Amount | M | | 8 |
| Currency Code | M/O | | 3 |
| Transaction Code | M/O | | 2 |
| Issuer Identifier | A | The first 6 digits of card number | 6 |
| Protected part of Card number | A | 12 + check number | 13 |
| Reference number | M/O | If possible up to 8 | 6 |
| Other protected data or personal data | M/O | What is needed for a application | |
| | | | 47 |
| Key ID / Address ID | A | If used 1 byte | |

| | | | |
|---|---|---|---|
| A= Automatically given, M=Manually given, M/O Manually and optional | | | |

The format of STS can change from different industry segments or application.

When the key pad is distributed we may set a Fixed currency for each terminal, so that such code can be used also in a list of selected variations. Say that a person wants to send and hand over dollars but like that the receiver also shall get dollars and the terminal is set to AED.

### Encryption Method and Key Management

The algorithm used in this example embodiment of the present innovations is a proven proprietary symmetric algorithm. This algorithm is used as a base to create a unique algorithm version for this innovation and is hereinafter referred to as the STS Algorithm. Though this algorithm is preferred, other algorithms could be used as well. The preferred algorithm is a steam cipher symmetric algorithm with 480 bit of encryption key.

The STS Algorithm in combination with the innovative Software is preferably embedded in the key pad as a terminal, but is not limited to that or any other device. The software can also be implemented, for example, as distributed software to be installed at an Issuers systems.

The Key Management method is preferably based on either a fully automatic PKI structure with symmetric key-exchange protocol or a protected manually key distribution method. Encryption-keys are preferably distributed with IKE protocol (current implementation use Diffie-Hellman key generation with pre-shared key authentication). When the keys expire the terminal/software must request new keys. Different keys are preferably selected for different data blocks depending on the issuer of the card (in part 1). Part 1 key (i.e., the first block) is terminal dependent.

In an alternate embodiment of the present innovations, the software has a key management function where each key pad or software and the Issuing Bank or Card Issuer will preferably keep, as standard, 10 symmetric encryption keys (not limited to 10) per device, user or card-holder (user) all stored encrypted in the bank/issuers data system and in the key pad/terminal until one of them is used to encrypt or decrypt the STS Record.

These key handling methods are not limited to 'predefined' loaded keys. Depending on which type of device (terminal) the Software will operate on, if the processor capacity allows to generate keys at the spot, a fully automatic method built on PKI solutions (Public Key Infrastructure) can be used.

Each transfer of an STS Record will preferably be, in one embodiment, encrypted by using a random key identifier between 0-9 and choose the safely stored key in respective position or by keys generated directly (PKI). The transferred STS Record (communicated) will then include the Key ID which will tell the decryption unit which key shall be used to decrypt the data string. In the standard format, each of the three [3] block (block i, block ii, block iii) will be encrypted by separate keys (per the example above).

The Key management and distribution will be strict symmetric and when GMN, ViA NET System / server distribute new encryption keys, those new keys are embedded in a STS Record, which the merchant, consumer, issuing bank or Issuer either manually or automatically will enter to the Software or the Key Pad terminal/device.

Both parties will then use one of ten encryption keys to decrypt the STS Record including the new ten encryption keys, this is done automatic by the STS Software and stored encrypted in the device or by the system, if not handled automatically in the PKI solution.

One advantage of the present innovations is that the cardholder's pin code is (preferably) never transmitted, and is used only at the cardholder's location. The entire transaction is encrypted at the cardholder's location, creating the STS for transmission to the necessary parties.

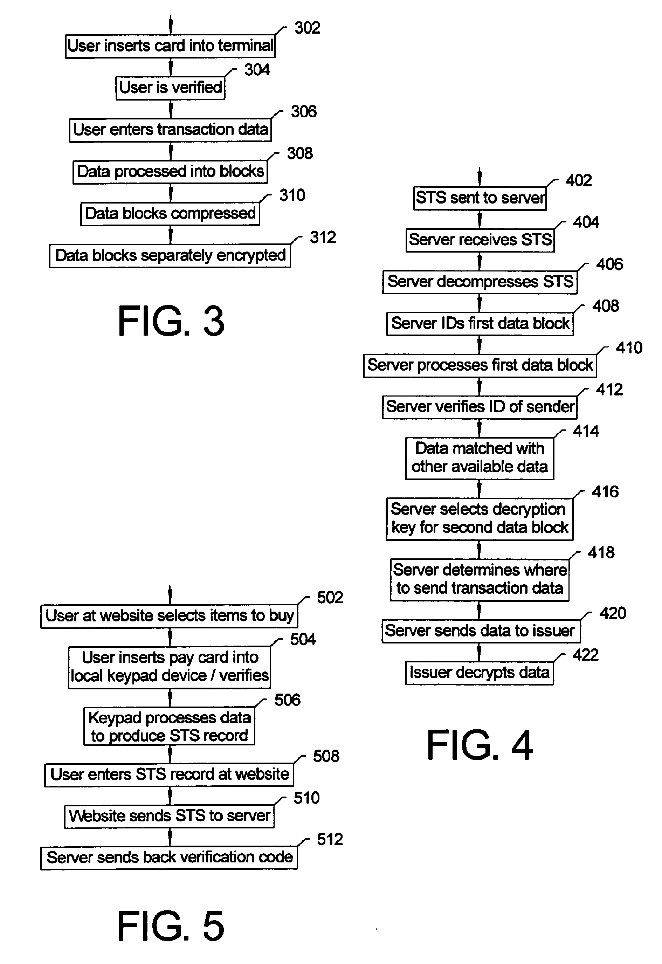

**Figure 3** shows an example flowchart implementing process steps consistent with an embodiment of the present innovations. Not all the following steps may be necessary to practice the present innovations, and they are presented here only as an example. In this example, the process starts when a user inserts card into terminal **(step 302).** The user is then verified (step **304),** for example, via the user's pin code, biometric data, etc. The user then enters transaction data and any other needed data, such as amount of the transaction, currency, accounts, etc. **(step 306).** The data is then processed **(step 308),** which preferably includes partitioning the data into separate blocks. The blocks generated are then compressed **(step 310)** and then separately encrypted, using different encryption keys for each **(step 312).** The encrypted blocks are then combined into a secure transaction string **(step 314).**

**Figure 4** shows a flowchart with example process steps for transmitting the STS, according to a preferred embodiment. In this example, the complete STS record is communicated to a hub, such as a GMN, ViA NET, or another server with the appropriate software to take advantage of the present innovations **(step 402).** This transmission can be made in a variety of ways, including (but not limited to) simple SMS, GPRS message, the Internet, a telephone call, or any other way that numbers and/or letters can be communicated. The GMN, ViA NET server receives the STS record **(step 404)** and decompresses it **(step 406).** The GMN then preferably identifies the first block **(step 408),** processes the data therein, including selecting proper decryption key **(step 410),** and verifies the ID of the sender **(step 412).** The data is then matched with other available data **(step 414).** The GMN, ViA NET then selects the proper decryption key for the second block **(step 416).** Then it determines which issuer the transaction will be passed to (such as, for example, identifying this information from a decoded block) **(step 418).** The data (or just part of the data, such as third block) is then transmitted to the issuer **(step 420),** and the issuer decrypts the information **(step 422).** It is noted that, in this example, none of block 3's data is stored on the GMN's server, as the GMN, ViA NET was never required to decode such information (and may not have had the proper decryption key in the first place).

In another example embodiment, a user can use his or her card while at the home or in another location by accessing the Internet and making a transaction at a website. **Figure 5** shows an example set of process steps consistent with implementing the present innovations in such a situation. In this example, a user at a website selects an item to buy **(step 502).** The user inserts their pay card into a local key pad device equipped with software configured to operate the present innovations and enters a pin code for verification **(step 504).** The key pad processes the data as described above to produce an STS record **(step 506).** The user enters the STS record at a predetermined field of the website which is preferably configured to accept such input **(step 508).** The website sends transaction information to a GMN, ViA NET hub (or another server with STS capability) **(step 510).** The hub/server then sends back a verification code **(step 512).**

By adding, the STS software to these devices or any other device (such as a desk top computer, PC, Laptop, PDA, POS terminal or any other device), the Secure Transaction String (STS Record) can be created or be processed. The innovation may also have a great effect on and use in societies which are not so developed as Europe, the US and main areas in the Middle East.

According to a disclosed class of innovative embodiments, there is provided: A system for conducting a secure transaction, comprising: an input device connected to a network and capable of implementing a procedure wherein: data associated with a transaction is received by the input device; the data associated with the transaction is partitioned into a plurality of data blocks; the data blocks are separately encrypted using different encryption keys for at least two of the plurality of data blocks; the data blocks are combined into a transaction string.

According to a disclosed class of innovative embodiments, there is provided: A method of conducting a transaction, comprising the steps of: when a user inputs data into a terminal, verifying the user's identity; receiving transaction data; partitioning the transaction data into a plurality of data blocks; encrypting the plurality of data blocks, wherein at least two different encryption keys are used to encrypt at least two different data blocks of the plurality; combining the encrypted data blocks into a secure transaction string.

According to a disclosed class of innovative embodiments, there is provided: A method of conducting a transaction, comprising the steps of: receiving, at a first node, a string associated with a transaction, wherein the string comprises a plurality of separately encrypted data blocks, and wherein the first node is configured with decryption keys associated with at least one, but not all, of the data blocks; decrypting a first data block of the plurality; storing data associated with the decrypted first data block; transmitting the string to a second node; wherein at least one of the plurality of data blocks is not stored in a decrypted form at the first node.

### Modifications and Variations

As will be recognized by those skilled in the art, the innovative concepts described in the present application can be modified and varied over a tremendous range of applications, and accordingly the scope of patented subject matter is not limited by any of the specific exemplary teachings given.

For example, the term Card can be any type of card, Credit Card, Debit Card, member card, stored value card, mileage card, pre-paid card or any system associated with a stored value measured in value equal to a currency, mileage equal to a value or time.

Likewise, the descriptions of embodiments presented herein refer to computer systems, terminals, or keypads, but these examples and terms are not intended to limit the type of node (as in any processing device, communication device, storage device, or networked device, for example) or processing system or other entity that can be used in implementing the present innovations. The terms "hub" and "GMN" are also used, but any computer system, including a server, can be used to implement the present innovations.

Likewise, the descriptions herein mention networks, but such networks should be understood to include all variety of networks, including the Internet, hard-wired networks and intranets, local networks, wide area networks, wireless and cellular networks, the PSTN, and any other mode of communication, whether digital or otherwise.

It should be noted that the embodiment of the invention has been described above purely by way of example and that many modifications and developments may be made thereto within the scope of the present invention.

## Claims

1. A system for conducting a secure transaction, comprising an input device connected to a network and capable of implementing a procedure wherein:
data associated with a transaction is received by the input device;
the data associated with the transaction is partitioned into a plurality of data blocks;
the data blocks are separately encrypted using different encryption keys for at least two of the plurality of data blocks;
the data blocks are combined into a transaction string.

2. The system of claim 1, wherein the procedure is implemented as a computer program product on a computer readable medium.

3. The system of claim 1 or 2, wherein the input device is selected from the group consisting of: a keypad, a banking terminal, and a computer displaying a website with input fields for the data.

4. A method of producing a transaction string, comprising the steps of:
when a user inputs data into a terminal, verifying the user's identity;
receiving transaction data;
partitioning the transaction data into a plurality of data blocks;
encrypting the plurality of data blocks, wherein at least two different encryption keys are used to encrypt at least two different data blocks of the plurality;
combining the encrypted data blocks into a secure transaction string.

5. The method of claim 4, further comprising the steps of:
communicating the secure transaction string to a terminal;
decompressing the secure transaction string;
using one or more encryption keys to decrypt one or more of the data blocks;
wherein at least one of the data blocks is not decrypted at the terminal.

6. A method of processing a transaction string, comprising the steps of:
receiving, at a first node, a string associated with a transaction, wherein the string comprises a plurality of separately encrypted data blocks, and wherein the first node is configured with decryption keys associated with at least one, but not all, of the data blocks;
decrypting a first data block of the plurality;
storing data associated with the decrypted first data block;
transmitting the string to a second node;
wherein at least one of the plurality of data blocks is not stored in a decrypted form at the first node.

7. The method of any of claims 4 to 6, wherein the terminal or node lacks encryption keys to decrypt at least one of the data blocks.

8. The method of any of claims 4 to 7, further comprising the step of compressing the plurality of data blocks.

9. The system or method of any preceding claim, wherein each data block is encrypted with a different key.

10. The system or method of any preceding claim, wherein a first data block of the plurality includes first transaction data, and a second data block of the plurality includes second transaction data.

11. The system or method of any preceding claim, wherein the transaction data includes data necessary to verify a user, identify an account, and complete a transaction.

12. The system or method of any preceding claim, wherein the plurality of data blocks are individually compressed.
